(19) Europäisches Patentamt
European Patent Office
Office européen des brevets

(11) **EP 4 236 477 A1**

(12) **EUROPEAN PATENT APPLICATION**
published in accordance with Art. 153(4) EPC

(43) Date of publication:
**30.08.2023 Bulletin 2023/35**

(21) Application number: **21882181.7**

(22) Date of filing: **22.10.2021**

(51) International Patent Classification (IPC):
**H04W 52/02** (2009.01)     **H04W 76/28** (2018.01)
**H04W 72/04** (2023.01)

(52) Cooperative Patent Classification (CPC):
Y02D 30/70

(86) International application number:
**PCT/CN2021/125903**

(87) International publication number:
**WO 2022/083769 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2020   CN 202011140957**

(71) Applicant: **Datang Gohigh Intelligent and
Connected Technology
(Chongqing) Co., Ltd.
Chongqing 400040 (CN)**

(72) Inventors:
• **WEN, Xiaoran
  Beijing 100191 (CN)**
• **ZHAO, Rui
  Beijing 100191 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **DATA TRANSMISSION METHOD AND APPARATUS, AND TERMINAL**

(57)     A data transmission method, a device, and a terminal are provided. The method is applied to a first terminal and includes: determining a target resource selection window according to discontinuous reception DRX configuration of a second terminal; selecting a transmission resource for a data packet in the target resource selection window, wherein transmission resources of at least first M transmissions of the data packet are within a target time period, the target time period is a period in which the target resource selection window overlaps with an active time determined by the DRX configuration, $N \geq M \geq 1$, N is a total quantity of transmissions of the data packet; transmitting the data packet to the second terminal on the transmission resource.

Fig. 5

**Description**

**CROSS-REFERENCE TO RELATED APPLICATION**

This application claims a priority to Chinese Patent Application No. 202011140957.8 filed on October, 22, 2020, the disclosures of which are incorporated in their entirety by reference herein.

**TECHNICAL FIELD**

The present disclosure relates to the field of communications technology, in particular, relates to a data transmission method, a device and a terminal.

**BACKGROUND**

In a mobile communication system based on a shared channel, such as Long Term Evolution (LTE), transmission of uplink and downlink data is controlled by a base station (eNB) scheduler, and when the scheduler determines to schedule a certain user, a control channel will be used to inform a user equipment on which resources to transmit or receive data. The user equipment (UE) monitors the control channel, and when the UE detects scheduling information for itself, completes transmission (uplink) or reception (downlink) of data according to an indication on the control channel. In an active state, since the user equipment does not determine when the eNB schedules the user equipment, a common operation mode is that the user equipment continuously monitors the control channel, parses each subframe containing its downlink scheduling control channel to determine whether the user equipment is scheduled. This operation mode can achieve a higher efficiency in case where data volume of the user equipment is large and may be frequently scheduled. However, for some traffic, a data arrival frequency is low, resulting in that the number of times for which the user equipment is scheduled is also small. If the user equipment still continuously monitors the control channel, power consumption of the user equipment is undoubtedly increased. In order to solve the problem of power consumption, a LTE system adopts a Discontinuous Reception (DRX) operation mode in which the user equipment periodically monitors a control channel, thereby achieving the purpose of power saving.

In a DRX mechanism for an existing Uu interface (an interface between the UE and a terrestrial radio access network), a control channel is used by the base station to inform a user equipment (UE) of resources on which the UE transmits or receives data. The UE monitors the control channel during a DRX on-duration (On Duration), and when scheduling information including information of the UE is detected, the UE completes data transmission (uplink) or data reception (downlink) according to an indication in the control channel. However, in resource allocation of a sidelink (SL) mode 2, the UE transmits a data packet in a way of autonomously selecting a resource. There may be a problem that reliable traffic transmission cannot be guaranteed when a sidelink DRX mechanism is introduced.

**SUMMARY**

The present disclosure provides a data transmission method, a device and a terminal, which solve the problem in the related art that reliable transmission of a traffic cannot be guaranteed when a sidelink DRX mechanism is introduced.

In a first aspect, a data transmission method performed by a first terminal is provided. The method includes: determining a target resource selection window according to discontinuous reception DRX configuration of a second terminal; selecting a transmission resource for a data packet in the target resource selection window, wherein transmission resources of at least first M transmissions of the data packet are within a target time period, the target time period is a period in which the target resource selection window overlaps with an active time determined by the DRX configuration, $N \geq M \geq 1$, N is a total quantity of transmissions of the data packet; transmitting the data packet to the second terminal on the transmission resource.

Optionally, determining the target resource selection window according to the discontinuous reception DRX configuration of the second terminal includes: using a maximum value between $n+T_{RX\_on}$ and $n+T1$ as a start of the target resource selection window and using $n+T2$ as an end of the target resource selection window, wherein, $n+T_{RX\_on}$ is a start time instant of a first on-duration of the second terminal after a time instant n, n is an arrival time instant of data packets or a resource reselection time instant, $n+T1$ is a start of a determined resource selection window, $n+T2$ is an end of a determined resource selection window.

Optionally, selecting the transmission resource for the data packet in the target resource selection window includes: obtaining a set of all available candidate single-slot resources in the target resource selection window by performing resource sensing; randomly selecting the transmission resources of the first M transmissions of the data packet from candidate single-slot resources, having time-domain locations within the target time period, in the set of all available candidate single-slot resources; wherein a start of the target time period is a maximum between $n+T_{RX\_on}$ and n+T1, an end of the target time period is $n+T_{RX\_end}$, and $n+T_{RX\_end}$ is an end time instant of a first on-duration of the second terminal after a time instant n, $n+T_{RX\_end}$ is earlier than n+T2.

Optonally, selecting the transmission resource for the data packet in the target resource selection window further includes: selecting N-M transmission resources for the data packet from the set of all available candidate single-slot resources; or selecting N-M transmission resources for the data packet from candidate single-slot resources, having time-domain locations in a time period from an end of the target time period to n+T2, of the set of all available candidate single-slot resources.

Optionally, selecting the transmission resource for the data packet in the target resource selection window further includes: randomly selecting N transmission resources for the data packet from the set of all available candidate single-slot resources, and completing resource selection until first M transmission resources of the N transmission resources are determined to be in the target time period; wherein a start of the target time period is a maximum between $n+T_{RX\_on}$ and n+T1, an end of the target time period is $n+T_{RX\_end}$, and $n+T_{RX\_end}$ is an end time instant of a first on-duration of the second terminal after a time instant n, $n+T_{Rx\_end}$ is earlier than n+T2.

Optionally, the target resource selection window includes a first resource selection window and a second resource selection window, the second resource selection window corresponds to the target time period. Determining the target resource selection window according to the discontinuous reception DRX configuration of the second terminal includes: using a maximum value between $n+T_{RX\_on}$ and n+T1 as a start of the first resource selection window, using n+T2 as an end of the first resource selection window, or using $n+T_{RX\_end}$ as a start of the first resource selection window, and using n+T2 as an end of the first resource selection window; using a maximum value between $n+T_{RX\_on}$ and n+T1 as a start of the second resource selection window, and using $n+T_{RX\_end}$ as an end of the second resource selection window; wherein $n+T_{RX\_on}$ is a start time instant of a first on-duration of the second terminal after a time instant n, $n+T_{RX\_end}$ is an end time instant of the first on-duration of the second terminal after the time instant n, and n is an arrival time instant of the data packet or a resource reselection time instant; n+T1 is a start of a determined resource selection window, n+T2 is an end of the determined resource selection window, and $n+T_{RX\_end}$ is earlier than n+T2.

Optionally, selecting the transmission resource for the data packet in the target resource selection window includes: obtaining a first set of available candidate single-slot resources in the first resource selection window by performing resource sensing, and obtaining a second set of available candidate single-slot resources; selecting transmission resources for the first M transmissions of the data packet from the second set of available candidate single-slot resources; and selecting transmission resources for N-M transmissions of the data packet from the first set of available candidate single-slot resources, N≥M≥1.

Optionally, before determining the target resource selection window according to the discontinuous reception DRX configuration of the second terminal, the method further includes: obtaining the DRX configuration of the second terminal, wherein the DRX configuration of the second terminal includes at least on-duration of monitoring a sidelink by the second terminal and DRX cycle.

In a second aspect, a terminal, which is a first terminal is provided. The terminal includes a transceiver, a memory, a processor, and a computer program stored on the memory and executable on the processor, wherein, when the processor executes the computer program, the processor implements the steps of the data transmission method according to the above first aspect.

In a third aspect, a data transmission device, applied to a first terminal, is provided. The device includes: a determining module, configured to determine a target resource selection window according to discontinuous reception DRX configuration of a second terminal; a resource selection module, configured to select a transmission resource for a data packet in the target resource selection window, wherein transmission resources of at least first M transmissions of the data packet are within a target time period, the target time period is a period in which the target resource selection window overlaps with an active time determined by the DRX configuration, N≥M≥1, N is a total quantity of transmissions of the data packet; a transmission module, configured to transmit the data packet to the second terminal on the transmission resource.

In a fourth aspect, a computer readable storage medium having stored thereon a computer program, wherein when the computer program is executed by a processor, the processor implements steps of the data transmission method the above first aspect.

Advantageous effects of the above technical solutions of the present disclosure are as follow.

The first terminal determines a target resource selection window according to a discontinuous reception DRX configuration of a second terminal, and selects a transmission resource for a data packet in the target resource selection window, wherein at least the first M transmission resources of the data packet are within a target time period, wherein the target time period is a period in which the target resource selection window overlaps with an active time determined by the DRX configuration, N≥M≥1, N is the total transmission times of the data packet; and the first terminal further transmits the data packet to the second terminal on the transmission resource. In this way, the influence of the DRX configuration of the second terminal on selection of the initial transmission and retransmission resources of the first terminal is fully considered, and it can be ensured that at least first M times of selection of transmission resources correspond to the reception period of the second terminal, thereby enabling the second terminal to ensure reliable reception of traffic while reducing power consumption.

## BRIEF DESCRIPTION OF THE DRAWINGS

Fig. 1 shows a basic principle of DRX;
Fig. 2 is a timing diagram of a resource selection window and a resource sensing window;
Fig. 3 is a schematic diagram of a re-evaluation mechanism;
Fig. 4 is a schematic diagram of a resource preemption mechanism;
Fig. 5 is a first flowchart of a data transmission method according to an embodiment of the present disclosure;
Fig. 6 is a timing diagram of resource sensing and selection performed by a first terminal and discontinuous reception performed by a second terminal according to an embodiment of the present disclosure;
Fig. 7 is a first timing diagram of a target resource selection window and discontinuous reception of a second terminal according to an embodiment of the present disclosure;
Fig. 8 is a second timing diagram of a target resource selection window and discontinuous reception of a second terminal according to an embodiment of the present disclosure;
Fig. 9 is a second flowchart of a data transmission method according to an embodiment of the present disclosure;
Fig. 10 is a first schematic diagram of resource selection according to an embodiment of the present disclosure;
Fig. 11 is a third flowchart of a data transmission method according to an embodiment of the present disclosure;
Fig. 12 is a second schematic diagram of resource selection according to an embodiment of the present disclosure;
Fig. 13 is a fourth flowchart of a data transmission method according to an embodiment of the present disclosure;
Fig. 14 is a schematic diagram of resource selection based on HARQ retransmission according to the present disclosure;
Fig. 15 is a first schematic diagram of a DRX procedure of a second terminal according to the present disclosure;
Fig. 16 is a second schematic diagram of a DRX procedure of a second terminal according to the present disclosure;
Fig. 17 is a third schematic diagram of a DRX procedure of a second terminal according to the present disclosure;
Fig. 18 is a fourth schematic diagram of a DRX procedure of a second terminal according to the present disclosure;
Fig. 19 is a flowchart of a data transmission method of a first terminal and discontinuous reception of a second terminal according to the present disclosure;
Fig. 20 is a block diagram of a structure of a data transmission device according to the present disclosure;
Fig. 21 is a block diagram of a structure of a terminal according to the present disclosure.

## DETAILED DESCRIPTION

In order to make a technical problem, technical solutions and advantages to be solved by the present disclosure more clear, detailed description will be given below with reference to drawings and specific embodiments. In the following description, specific details such as specific configurations and components are provided merely to assist in thorough understanding of embodiments of the present disclosure. Accordingly, it should be apparent to those skilled in the art that various changes and modifications may be made to the embodiments described herein without departing from the scope and the spirit of the present disclosure. In addition, description of known functions and configuration are omitted for clarity and brevity.

It should be understood that references to "one embodiment" or "an embodiment" throughout the specification mean that particular features, structures, or characteristics related to embodiments are included in at least one embodiment of the present disclosure. Thus, "in one embodiment" or "in an embodiment" appearing throughout the specification need not necessarily refer to the same embodiment. Furthermore, these particular features, structures, or characteristics may be combined in any suitable manner in one or more embodiments.

In the various embodiments of the present disclosure, it should be understood that sizes of sequence numbers of processes described below do not imply a sequential order of execution, the order of execution of the processes should be determined by their function and inherent logic, and should not constitute any limitation on implementation processes of the embodiments of the present disclosure.

In addition, such terms as "system" and "network" herein are often used interchangeably herein.

In the embodiments provided herein, it is understood that "B corresponding to A" indicates that B is associated with A from which B may be determined. However, it should also be understood that determining B from A does not mean determining B from A alone, but B may also be determined from A and/or other information.

In the embodiments of the present disclosure, forms of the access networks are not limited, may be access networks such as a macro base station (Macro Base Station), a pico base station (Pico Base Station), a Node B (3G Mobile Base Station), an enhanced base station (eNB), a home enhanced base station (Femto eNB or Home eNode B or Home eNB or HeNB), a relay station, an access point, an RRU (Remote Radio Unit), an RRH (Remote Radio Head), etc. The user terminal may be a mobile telephone (or handset), or other devices capable of transmitting or receiving wireless signals, including user equipment, personal digital assistants (PDAs), wireless modems, wireless communication devices, handheld devices, laptop computers, cordless telephones, wireless local loop (WLL) stations, a Customer Premise Equipment (CPE) capable of converting a mobile signal into a WiFi signal, a mobile smart hotspot, a smart home appliance, or other devices capable of spontaneously communicating with a mobile communication network without human operation, etc.

In describing the embodiments of the present disclosure, some concepts used in the following description are first explained.

1. Basic Principles of DRX

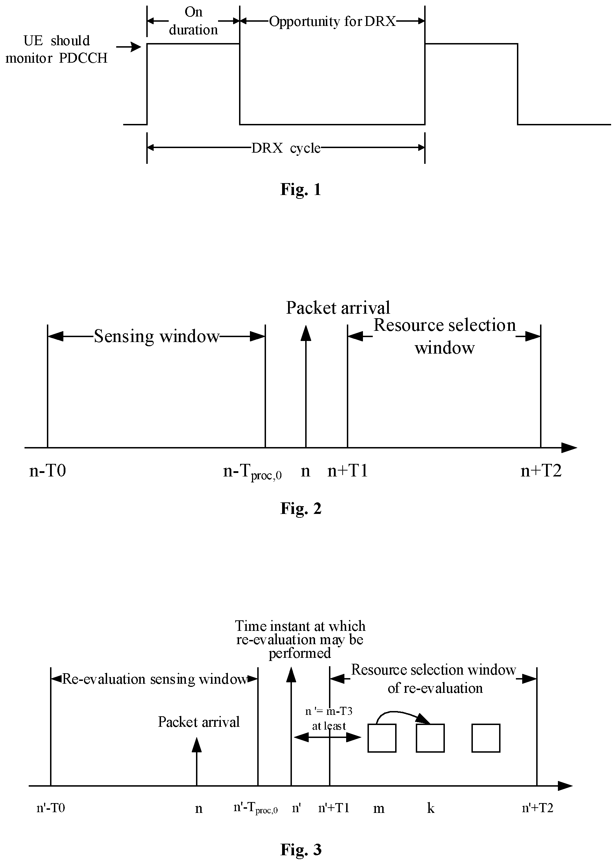

A basic principle of DRX is shown in Fig. 1. On duration indicates a time period during which a terminal UE monitors a control channel. During this period, a radio frequency channel is established and the UE continuously monitors the control channel; the UE is in a sleep state at other time periods except the On duration, a radio frequency link of the UE will be cut off, the control channel is not monitored any longer to achieve the purpose of power saving. All On Durations occur in cycle, with specific cycles being configured by an eNB.

The DRX mechanism of a cellular network takes into account an arrival model of a data traffic, i.e. arrival of data packets is bursty (which can be understood that once there are data packet arrivals, more packets will arrive consecutively in a short time). In order to adapt to such traffic arrival characteristics, a LTE DRX process adopts various timers, and is combined with a Hybrid Automatic Repeat reQuest (HARQ) process to achieve better power saving performance.

2. Introduction of the timers related to DRX, mainly including:

a. drx-onDurationTimer: the time when the UE periodically monitors the control channel.

b. Short DRX cycle timer: in order to better match characteristics of data traffic arrival, the cellular network communication system supports configuration of two DRX cycles: a long cycle and a short cycle. Both cycles have the same on duration timer, but the sleep time is different. In the short cycle, the sleep time is relatively short and the UE can monitor the control channel again more frequently. The long cycle is mandatory and is an initial state of the DRX process; the short cycle is optional. The short DRX cycle timer sets the duration of the short cycle. After the short cycle timer expires, the UE will use the Long cycle.

c. Drx-Inactivity Timer: after the DRX is configured, the timer is turned on when the UE receives a control signaling for HARQ initial transmission within a time duration (Active Time) during which monitoring the control channel is allowed. The UE continuously monitors the control channel before the timer expires. If the UE receives the control signaling for the HARQ initial transmission before the drx-Inactivity Timer expires, the UE will stop the drx-Inactivity Timer and restart a new drx-Inactivity Timer.

d. HARQ Round-Trip Time Timer (HARQ RTT Timer): which is divided into a DRX downlink HARQ round-trip time timer (drx-HARQ-RTT-TimerDL) and a DRX uplink HARQ round-trip time timer (drx-HARQ-RTT-TimerUL). The purpose is to make it possible for the UE not to monitor the control channel before the next retransmission is started, to achieve a better power saving effect. In the downlink, when a first symbol after a physical uplink control channel (Physical Uplink Control Channel, PUCCH) transmission of a UE-related process starts, the timer will be started. If decoding of the data in the corresponding HARQ process is unsuccessful after the previous HARQ transmission (UE feedback NACK), after the downlink HARQ round trip delay timer (DL HARQ RTT Timer) times out, the UE turns on the DRX downlink retransmission timer (drx-Retransmission Timer DL). If data in a corresponding HARQ process is successfully decoded (UE feeds back ACK) after a previous HARQ transmission, the UE does not start the drx-Retransmission Timer DL after the drx-HARQ-RTT-TimerDL timer expires. If only drx-HARQ-RTT-Timer DL is currently running, then the UE does not monitor the control channel.

e. HARQ retransmission timer (HARQ retransmission Timer): which is divided into a drx-RetransmissionTimerDL and a DRX uplink retransmission timer (drx-RetransmissionTimer UL). In the downlink, while the downlink retransmission timer (DLHARQ retransmission Timer) is running, the UE monitors the control signaling and waits for retransmission scheduling of the corresponding HARQ process.

3. Definition of Active time under DRX

When any one of an On duration Timer, a HARQ retransmission Timer and an Inactivity Timer (Inactivity Timer) is running, and the second terminal will monitor the control channel. The time duration for which the second terminal monitors the control channel is also referred to as Active Time.

In the LTE system, the Active Time is influenced by other factors besides the DRX timer (DRX timer). the Active Time of the LTE Rel-8 UE includes the following:

(1) a drx-onDuration Timer or a drx-Inactivity Timer or drx-Retransmission Timer DL or a drx-Retransmission Timer UL or a-Contention Resolution Timer being running;
(2) a Scheduling Request (SR) is sent on a Physical Uplink Control Channel (PUCCH) and is pending the Physical Downlink Control Channel (PDCCH);
(3) Time for a UE in non-contention random access procedure to wait for a PDCCH scheduled by a Cell-Radio Network Temporary Identifier (C-RNTI) after receiving a Random Access Response (RAR).

It should be noted that calculation of on-duration under a common DRX can be as follows:

(1) For the short DRX cycle, a calculation formula for the on duration is as follows:

$$[(SFN \times 10) + \text{subframe number}] \text{ modulo (shortDRX-Cycle)} = (\text{drxStartOffset}) \text{ modulo (shortDRX-Cycle)};$$

(2) For the long DRX cycle, the calculation formula for the on duration is as follows:

$$[(SFN \times 10) + \text{the subframe number}] \text{ modulo (longDRX-Cycle)} = \text{drxStartOffset};$$

where the SFN is a SFN number of the current radio frame; the subframe number is the number of the current subframe; shortDRX-Cycle is the short DRX cycle; longDRX-Cycle is the long DRX cycle; and drxStartOffset is an offset value configured for a RRC signaling.

4. a resource allocation procedure for a New Radio-Vehicle to Everything Mode 2 (NR-V2X Mode 2).

The NR-V2X Mode 2 resource allocation is intended to support enhanced application requirements in a protocol Release-15 (Rel-15) which LTE-V2X cannot support, and adopts a distributed resource scheduling method (i.e. UE autonomously selects transmission resources). Since there is no uniform scheduling by the base station, the UE needs to determine resource occupation of other UEs through a sensing mechanism, and selects resources according to a sensing result. A resource selection procedure of NR-V2X Mode 2 is:

Process 1: a candidate single-slot resource $R_{x,y}$ is continuous x+j sub-channels on a ty slot within $[n+T_1, n+T_2]$ duration, as shown in Fig. 2, where $0 \leq T_1 \leq T_{proc,1}$, $T_{proc,1}$ represents a transmission processing delay of the UE (including: sensing-based resource selection time, transmission preparation time of a PSCCH, and transmission preparation time of a PSSCH), and may take values of {3, 5, 9, 17} physical slots corresponding to Sub-Carrier Space (SCS) of {15, 30, 60, 120} kHz, respectively, $T_{2min} \leq T_2 \leq$ Remaining Packet Delay Budget (Remaining PDB), $T_{2min}$ is a minimum value of $T_2$ configured by a higher-layer parameter t2min_SelectionWindow, and the remarking PDB is the remaining delay budget of data packets. The total number of candidate single-slot resources is $M_{total}$.

Process 2: the UE continuously monitors slots in a sensing window $[n-T_0, n-T_{proc,0}]$, and performs decoding of PSCCH or PSSCH and RSRP measurement of PSSCH or PSCCH. T0 is the length of the sensing window configured by a higher layer, $T_{proc,0}$ is the time for the UE to process a previous sensing result, and the value may be {1, 1, 2, 4} physical slots corresponding to SCSs {15, 30, 60, 120} kHz, respectively.

Process 3: Th(pi, $p_j$) indicates the i-th RSRP domain in sl-ThresPSSCH-RSRP-List-r16, i=pi+($p_j$-1) $\times$ 8, pi indicates the priority indicated in the received SCI, $p_j$ indicates the priority of transmission of the transmitting UE, $p_j$=prio$_{TX}$.

Process 4: $S_A$ is initialized as a set of all candidate single-slot resources.

Process 5: candidate slots corresponding to skip slots (slots not monitored) are excluded, skip slots are slots (e.g. y) that cannot be sensed due to influence of half-duplex, and for all periods (e.g. 20ms, 50ms, 100ms) configured by the system, all candidate slots (i.e., slots, within the selection window, of y, y+20 $\times$ 2$^\mu$, y+40 $\times$ 2$^\mu$, y+50 $\times$ 2$^\mu$, y+60 $\times$ 2$^\mu$, y+80 $\times$ 2$^\mu$, y+100 $\times$ 2$^\mu$ ...... etc.) at subsequent corresponding positions are excluded.

Process 6: excluding candidate single-slot resources satisfying the following two conditions;

Condition a: a RSRP measurement value of the PSSCH (PSSCH-RSRP) indicated by the received Sidelink Control Information (SCI) is higher than Th (prio$_{RX}$, prio$_{TX}$);
Condition b: the reserved resource indicated by the received SCI will partially or completely overlap with the TB sent on a candidate resource y or the TB sent on a subsequent candidate resource y+x $\times$ P$_{step}$ $\times$ 2$^\mu$, P$_{step}$

is a traffic generation period, and the unit of $P_{step}$ is ms. x is an integer representing the number of subsequent cycles.

Process 7: if the remaining resources in $S_A$ are less than $X \times M_{total}$, then $Th(pi, p_j)$ is increased by 3dB and return to Process 4; for a given $prio_{TX}$, X is configured by a higher-layer parameter sl-xPercentage($prio_{TX}$)。

Process 8: UE reports $S_A$ to a higher layer.

Process 9: the higher layer randomly selects the initial transmission resources and the retransmission resources for the current data packets in the Saunder a constraint condition that the HARQ RTT (Round-Trip Time) is satisfied.

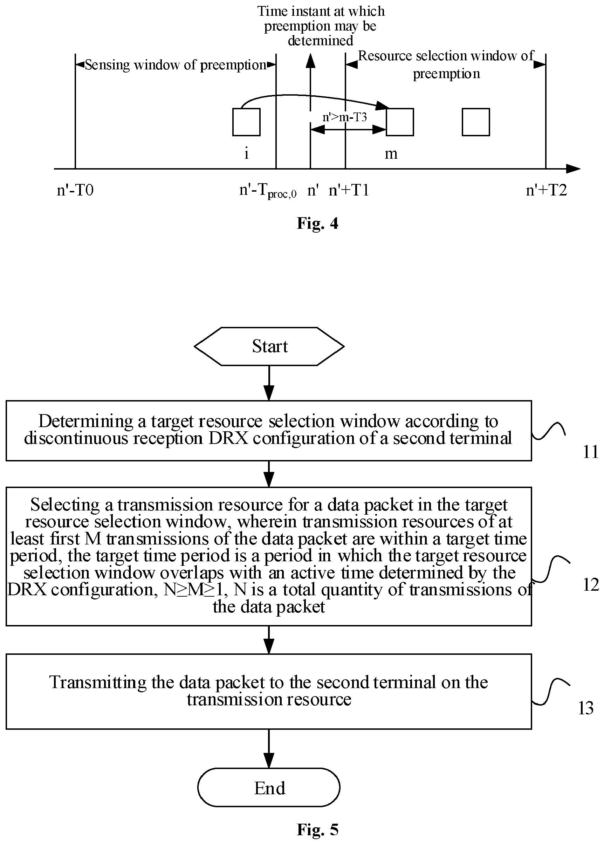

In order to solve the problem of resource collision caused by an aperiodic burst traffic and to ensure reliability of a high priority traffic, a Re-evaluation mechanism and a Pre-emption mechanism are added respectively, as shown in Fig. 3 and Fig. 4. The re-evaluation mechanism is mainly for unreserved resources, and whether the selected resources collide is determined according to the latest sensing result before resources are sent. If the collision occurs, then reselection may be performed to reduce the probability of the resource collision; the preemption mechanism mainly aims at the reserved resources, and if the reserved resource are found to be preempted by a high priority terminal UE, then it is necessary to trigger the low priority UE to perform the resource reselection, so as to avoid collision between the high priority UE and the low priority UE and ensure the performance of a high priority traffic.

In particular, embodiments of the present disclosure provide a data transmission method, a device and a terminal, which solve the problem in the related art that reliable transmission of a traffic cannot be guaranteed when a sidelink DRX mechanism is introduced in.

First embodiment

As shown in Fig. 5, an embodiment of the present disclosure provides a data transmission method, which is applied to a first terminal, and the method specifically includes the following steps 11-13.

Step 11: determining a target resource selection window according to discontinuous reception DRX configuration of a second terminal.

The target resource selection window is determined from determined resource selection windows according to the discontinuous reception DRX configuration of the second terminal, and the determined resource selection windows are configured by a first terminal according to parameters configured by a higher layer, As shown in Fig. 2, the determined resource selection window corresponds to a period of n+T1 to n+T2, n is a generation time instant or a resource reselection time instant of the current data packet, $0 \leq T_1 \leq T_{proc,1}$, $T_{proc,1}$ represents a transmission processing delay of the terminal, $T_{2min} \leq T_2 \leq$ remaining PDB, $T_{2min}$ is the minimum value of $T_2$ configured by the higher layer, and remaining PDB is the remaining delay budget of the data packet. Fig. 2 shows the timing relationship between the determined resource selection window and the resource sending window.

The discontinuous reception DRX configuration of the second terminal is a set of DRX parameters configured by the network to the second terminal or a set of DRX parameters selected by the second terminal from multiple sets of DRX parameters configured by the network, or a set of DRX parameters autonomously configured and notified to the network by the second terminal, or a set of DRX parameters configured to the second terminal by the first terminal that has established a connection in advance.

Further, the DRX configuration of the second terminal includes at least following: a duration during which the second terminal monitors the sidelink and a period of the DRX, wherein, the duration for which the second terminal monitors the sidelink includes at least a period during which the drx-onDurationTimer or the drx-inactivityTimer are running. The terminal wakes up at a start position of the onDuration of each DRX cycle to start the drx-onDurationTimer, that is, starts to monitore the control channel. For the drx-InactivityTimer, when the second terminal receives the control signaling of the HARQ initial transmission within the time duration allowed to monitor the control channel (Active Time), the second terminal starts drx-InactivityTimer, and continuously monitors the control channel before the drx-Inactivity-Timer expires. If the second terminal receives the control signaling of the HARQ initial transmission before the drx-InactivityTimer expires, the second terminal stops the drx-InactivityTimer and restarts the drx-InactivityTimer.

Step 12: selecting a transmission resource for a data packet in the target resource selection window, wherein transmission resources of at least first M transmissions of the data packet are within a target time period, the target time period is a period in which the target resource selection window overlaps with the active time determined by the DRX configuration, where $N \geq M \geq 1$, N is the total number of transmission times of data packets;

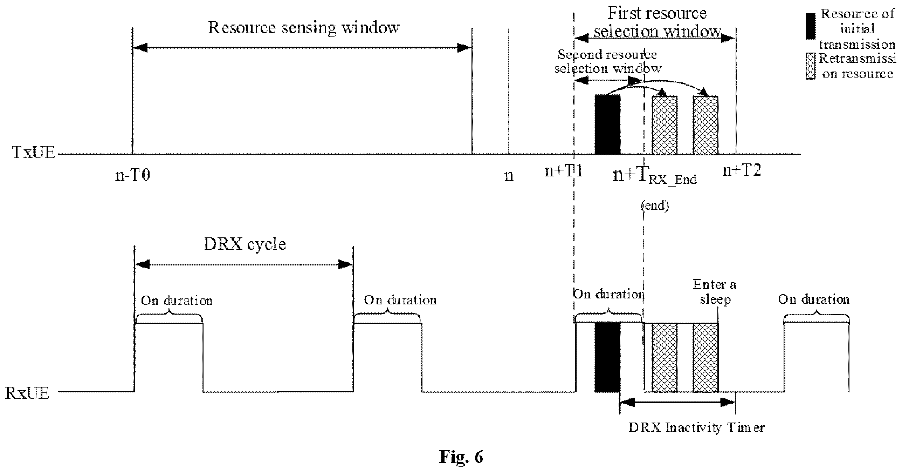

In this step, as shown in Fig. 6, which shows a timing diagram of resource sensing and selection performed by the first terminal and discontinuous reception performed by the second terminal. As shown in Fig. 6, the target time period is a period in which the target resource selection window of the first terminal (TxUE) overlaps with the reception period (onDuration) of the DRX configuration of the second terminal (RxUE), i.e., the period corresponding to a dotted line in Fig. 6.

In particular, decoding of the PSCCH (Physical Sidelink Control Channel) and PSSCH (Physical Sidelink Shared Channel) -RSRP (Reference Signal Receiving Power) or PSCCH-RSRP measurement are performed by detecting a sensing window $[n-T_0, n-T_{proc,0})$ time period, and obtains results used for resource selection. Transmission resources are selected for a data packet in the target resource selection window according to sensing results, wherein $T_0$ is a length of a sensing window configured by a higher layer, and $T_{proc,0}$ is time required for the terminal UE to process the previous sensing result.

Step 13: transmitting the data packet to the second terminal on the transmission resource.

In this embodiment, the first terminal determines the target resource selection window according to the discontinuous reception DRX configuration of the second terminal, and selects a transmission resource for a data packet in the target resource selection window; arranges transmission resources of at least first M transmissions of the data packet within the target time period, wherein the target time period is a period in which the target resource selection window overlaps an active time determined by the DRX configuration, $N \geq M \geq 1$, N is the total transmission times of the data packets; and further transmits the data packets to the second terminal on the transmission resources. In this way, the influence of the DRX configuration of the second terminal on selection of the initial transmission resources and retransmission resources of the first terminal is fully considered, and it can be ensured that the transmission resources selected for at least the first M times of transmissions correspond to the reception period of the second terminal, thereby enabling the second terminal to reliably receive traffic while reducing power consumption.

The following describes the target resource selection window and a corresponding resource selection method. Specifically, the target resource selection window includes the following two cases.

Case 1: there is only one target resource selection window

In one embodiment, the above step 11 includes:
using a maximum value between $n+T_{RX\_on}$ and $n+T1$ as a start of the target resource selection window and using $n+T2$ as an end of the target resource selection window, wherein, $n+T_{Rx\_on}$ is a start time instant of the first on-duration of the second terminal after a time instant n, n is arrival time instant of data packets or resource reselection time instant, $n+T1$ is a start of a determined resource selection window, $n+T2$ is an end of a determined resource selection window.

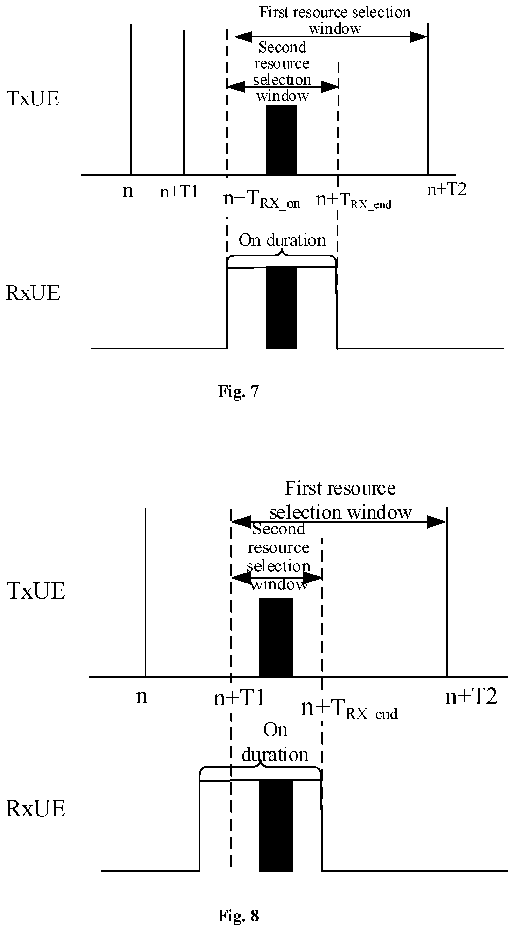

As shown in Fig. 7, if the time of $n+T_{RX\_on}$ is later than the time of $n+T1$, then the target resource selection window is from $n+T_{RX\_on}$ to $n+T2$, wherein $n+T_{RX\_end}$ is earlier than $n+T2$.

As shown in Fig. 8, if the time of $n+T_{RX\_on}$ is earlier than the time of $n+T1$, then the target resource selection window is from $n+T1$ to $n+T2$, wherein $n+T_{RX\_end}$ is earlier than $n+T2$.

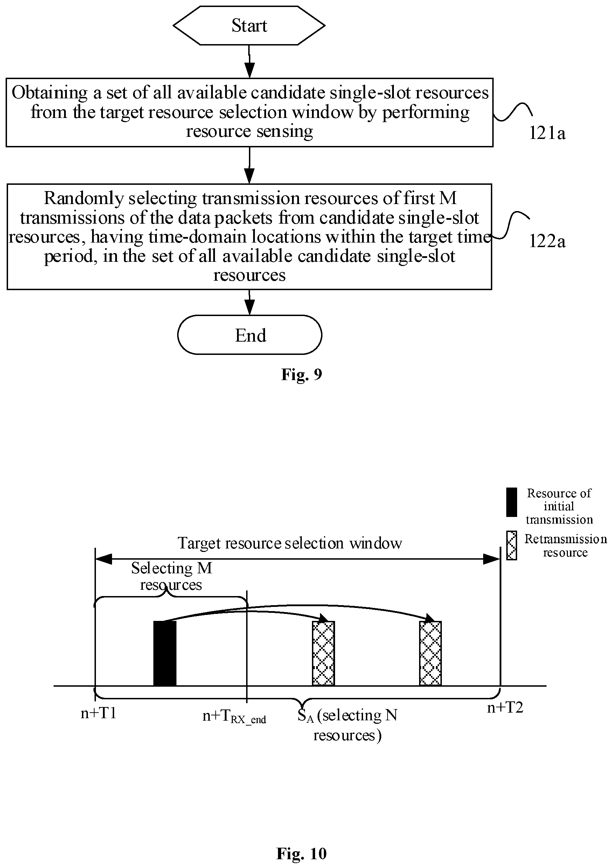

In this case 1, the step 12 described above includes the follow two ways:
First way: as in Fig. 9, step 12 includes step 121a and step 122a.

Step 121a: obtaining a set of all available candidate single-slot resources from the target resource selection window by performing resource sensing;

Step 122a: randomly selecting transmission resources of first M transmissions of the data packets from candidate single-slot resources, having time-domain locations within the target time period, in the set of all available candidate single-slot resources.

A start of the target time period is a maximum between $n+T_{RX\_on}$ and $n+T1$, an end of the target time period is $n+T_{RX\_end}$, and $n+T_{RX\_end}$ is an end time instant of a first on-duration of the second terminal after the time instant n, $n+T_{RX\_end}$ is earlier than $n+T2$.

Specifically, the step 121a may include:

a1: initializing Sa as a set of all candidate single-slot resources in the target resource selection window, wherein the total number of candidate resources in $S_A$ is $M_{total}$;
a2: excluding the candidate resources corresponding to the skip slot in the Sa and the candidate resources overlapping reserved resources in a received SCI and having a RSRP higher than a threshold value, to obtain the set of all available candidate single-slot resources.

If the remaining resources in the SA (resources in the set of all available candidate single-slot resources) are less than $X \times M_{total}$, then $Th(pi, p_j)$ is raised by 3 dB and return to step a; X is configured by higher-layer parameters; The $Th(pi, p_j)$ indicates the i-th RSRP domain in a higher-layer parameter sl-ThresPSSCH-RSRP-List-r16, $i=p_i+(p_j-1) \times 8$, pi indicates the priority indicated in the received SCI, $p_j$ indicates the priority of transmission of the transmitting UE, $p_j=prio_{TX}$.

Further, the set of all available candidate single-slot resources and the start of the target resource selection window are reported to the higher layer, and the start of the target resource selection window is the starting time of the target resource selection window, i.e., n+T1 or $n+T_{RX\_on}$.

Based on the above first way, step 12 further includes:

selecting N-M transmission resources for the data packets from the set of all available candidate single-slot resources; or
selecting N-M transmission resources for the data packets from the candidate single-slot resources, having time-domain positions in a time period from the end of the target time period to n+T2, of the set of all available candidate single-slot resources.

The end of the target time period is $n+T_{RX\_end}$, $n+T_{Rx\_end}$ is the end time instant of the first on-duration of the second terminal after the time instant n, and $n+T_{RX\_end}$ is earlier than n+T2.

It should be noted that when selecting N-M transmission resources for the data packets in the set of all available candidate single-slot resources, the transmission resources of the first M transmissions, having been selected for the data packets, from candidate single-slot resources having time-domain positions within the target time period need to be excluded.

Furthermore, it should be pointed out that when a receiving UE supports retransmission based on HARQ feedback, a transmitting UE needs to randomly select a retransmission resource for the current data packet from the set of all available candidate single-slot resources, under a condition that a constraint condition of HARQ RTT is satisfied.

Second way: randomly selecting N transmission resources for the data packet from the set of all available candidate single-slot resources, and completing resource selection until first M transmission resources of the N transmission resources are determined to be in the target time period;

A start of the target time period is a maximum between $n+T_{RX\_on}$ and n+T1, an end of the target time period is $n+T_{RX\_end}$, and $n+T_{RX\_end}$ is an end time instant of the first on-duration of the second terminal after the time instant n, $n+T_{RX\_end}$ is earlier than n+T2.

The second way specifically includes randomly selecting N transmission resources for the current data packet at any position in the set of all available candidate single-slot resources, the N transmission resources including one initial transmission resource and N-1 retransmission resources; determining whether the time-domain positions of at least M resources in the N resources are in a time period from the start of the target resource selection window to the $n+T_{RX\_end}$; if the time-domain positions are in the time period, then completing resource selection; if the time-domain positions are not in the time period, then this step is repeated until completing the resource selection, wherein N is the total transmission times of the current data packets, M is an integer, M≥1 and M≤N.

It should be noted that when the second terminal supports retransmission based on HARQ feedback, the first terminal needs to randomly select retransmission resources for the current data packets from the set of all available candidate single-slot resources, under a condition that restriction of HARQ RTT is satisfied.

For example, taking M = 1 as an example, Fig. 10 is a schematic diagram showing that N transmission resources are randomly selected for the data packets in the set of all available candidate single-slot resources, and an initial transmission resource is within the target time period.

Case 2: the target resource selection window includes a first resource selection window and a second resource selection window, the second resource selection window corresponds to the target time period.

The above step 11 includes: using a maximum value between $n+T_{RX\_on}$ and n+T1 as a start of the first resource selection window, using n+T2 as an end of the first resource selection window, or using $n+T_{RX\_end}$ as a start of the first resource selection window, and using n+T2 as an end of the first resource selection window; using a maximum value between $n+T_{RX\_on}$ and n+T1 as a start of the second resource selection window, and using $n+T_{RX\_end}$ as an end of the second resource selection window; wherein $n+T_{Rx\_on}$ is the start time instant of the first on-duration of the second terminal after the time instant n, $n+T_{RX\_end}$ is the end time instant of the first on-duration of the second terminal after the time instant n, and n is the arrival time instant of the data packets or the resource reselection time instant; n+T1 is the start of the determined resource selection window, n+T2 is the end of the determined resource selection window, and $n+T_{RX\_end}$ is earlier than n+T2.

In Fig. 7, the time instant $n+T_{RX\_on}$ is later than the time instant n+T1, the first resource selection window is a time perod from $n+T_{RX\_on}$ to n+T2, or the first resource selection window is a time period from $n+T_{RX\_end}$ to n+T2, and the second resource selection window is a time period from $n+T_{RX\_on}$ to $n+T_{RX\_end}$, wherein $n+T_{RX\_end}$ is earlier than n+T2.

In Fig. 8, the time instant $n+T_{RX\_on}$ is earlier than the time instant n+T1, the first resource selection window is a time perod from n+T1 to n+T2, or the first resource selection window is a time period from $n+T_{RX\_end}$ to n+T2, and the second resource selection window is a time period from n+T1 to $n+T_{RX\_end}$, wherein $n+T_{RX\_end}$ is earlier than n+T2.

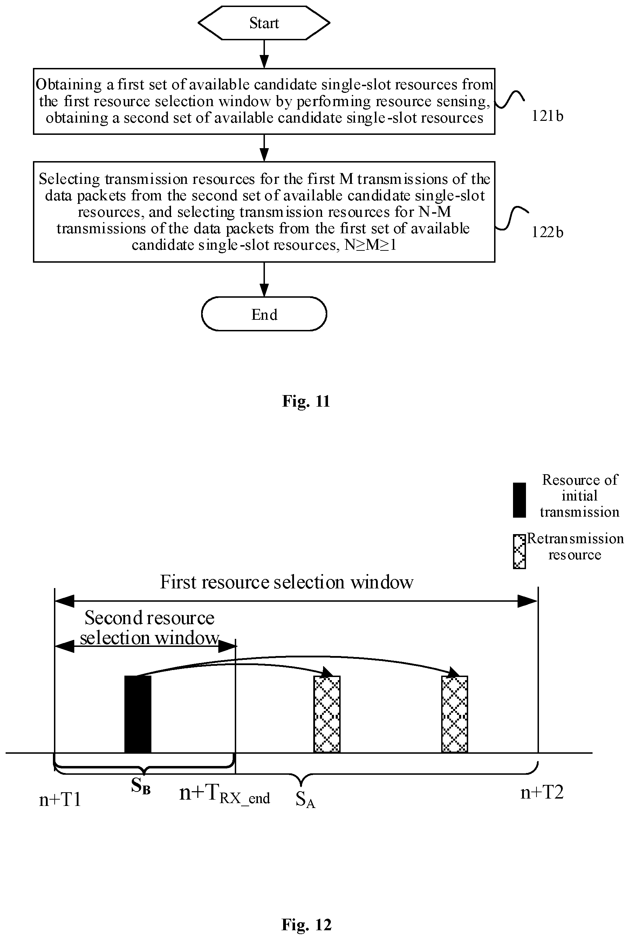

In the case 2, as in Fig. 11, the above step 12 includes:

step 121b: obtaining a first set of available candidate single-slot resources from the first resource selection window, and a second set of available candidate single-slot resources in the second resource selection window by performing resource sensing;

step 122b: selecting transmission resources for the first M transmissions of the data packets from the second set of available candidate single-slot resources, and selecting transmission resources for N-M transmissions of the data packets from the first set of available candidate single-slot resources, N≥M≥1.

For example, taking M = 1 as an example, as shown in Fig. 12, an initial transmission resource is selected in the second resource selection window, and retransmission resources are selected in the first resource selection window.

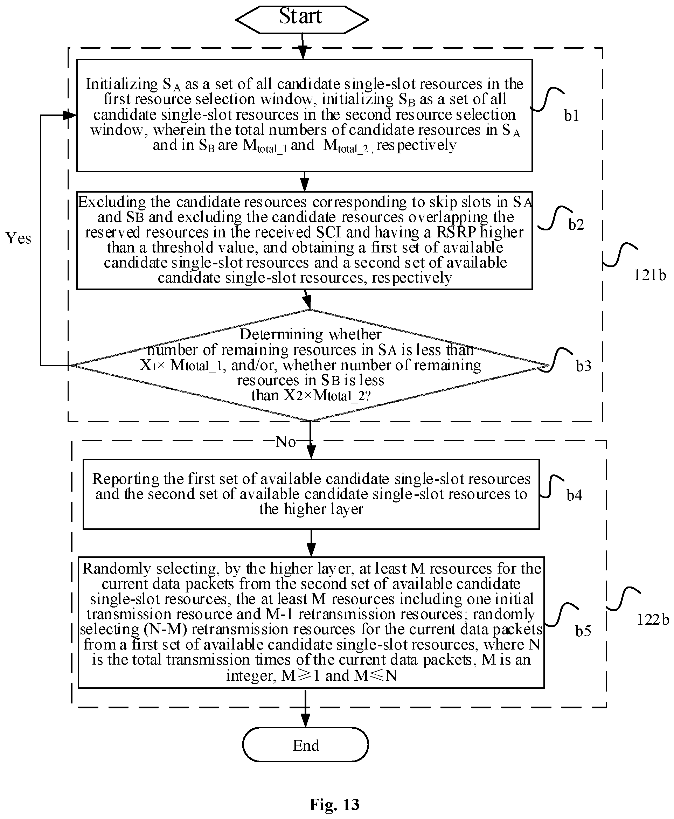

For example, the specific flow of the above steps 121b and 122b can be shown in Fig. 13.

As in Fig. 13, step 121b may include:

b1: initializing $S_A$ as a set of all candidate single-slot resources in the first resource selection window, initializing $S_B$ as a set of all candidate single-slot resources in the second resource selection window, wherein the total number of candidate resources in $S_A$ is $M_{total\_1}$ and the total number of candidate resources in $S_B$ is $M_{total\_2}$;

b2: excluding the candidate resources corresponding to skip slots in $S_A$ and $S_B$ and excluding the candidate resources overlapping the reserved resources in the received SCI and having a RSRP higher than a threshold value, and obtaining a first set of available candidate single-slot resources and a second set of available candidate single-slot resources, respectively;

b3: determining whether the number of remaining resources in the Sa (resources in the first set of the available candidate single-slot resources) is less than $X_1 \times M_{total\_1}$, and/or, whether the number of remaining resources (resources in the second set of second available candidate single-slot resources) in the Sa is less than $X_2 \times M_{total\_2}$, and if being less than $X_1 \times M_{total\_1}$ and/or $X_2 \times M_{total\_2}$, then raising Th(pi, pj) by 3dB and returning to step b1; $X_1$ and $X_2$ are configured by higher-layer parameters; if not being less than $X_1 \times M_{total\_1}$ and/or $X_2 \times M_{total\_2}$, the proceeding to step b4;

The Th(pi, $p_j$) indicates the i-th RSRP (Reference Signal Receiving Power) field in the higher-layer parameter sl-ThresPSSCH-RSRP-List-r16, i=$p_i$+($p_j$-1) $\times$ 8, pi indicates the traffic priority indicated in the received SCI, $p_j$ indicates the priority of transmission of the transmitting UE (first terminal), $p_j$=prio$_{TX}$.

Specifically, step 122b includes:

b4: reporting the first set of available candidate single-slot resources and the second set of available candidate single-slot resources to the higher layer;

b5: randomly selecting, by the higher layer, at least M resources for the current data packets from the second set of available candidate single-slot resources, the at least M resources including one initial transmission resource and M-1 retransmission resources; randomly selecting (N-M) retransmission resources for the current data packets from a first set of available candidate single-slot resources, where N is the total transmission times of the current data packets, M is an integer, M≥1 and M≤N.

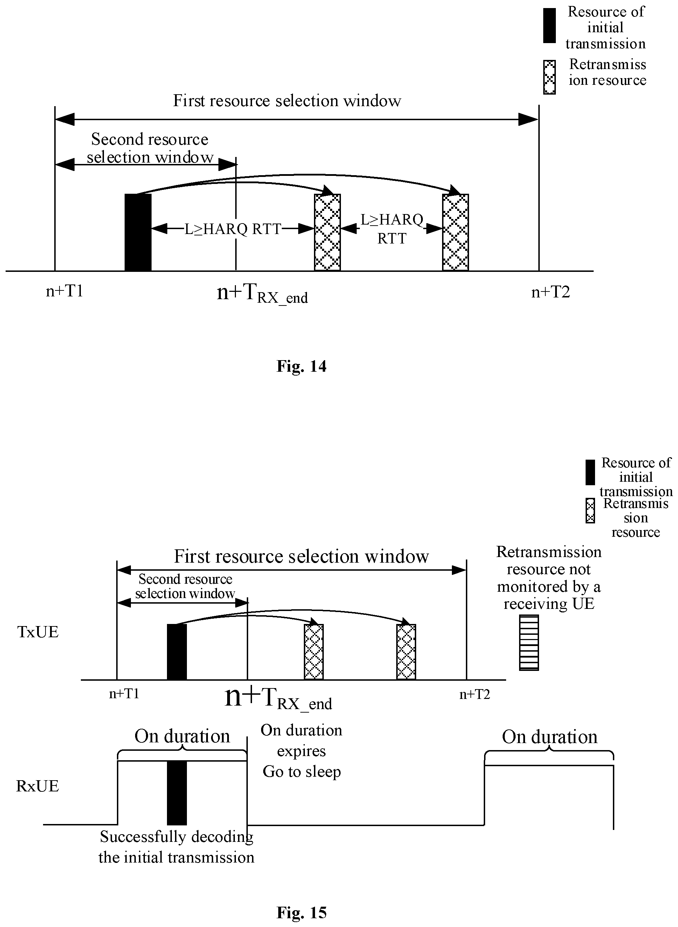

Furthermore, it should be pointed out that when the second terminal supports retransmission based on HARQ feedback, the first terminal needs to randomly select retransmission resources for the current data packet under the condition that the constraint of HARQ RTT is satisfied. That is, when the second terminal supports HARQ-based feedback and when the first terminal performs the above-described resource selection procedure, the interval between selected adjacent two resources needs to satisfy L≥HARQ RTT. As shown in Fig. 14, HARQ RTT is a round-trip delay required for the second terminal to decode information and perform HARQ feedback, that is, a minimum time interval for the first terminal to send two consecutive data packets. When the second terminal does not support the HARQ-based feedback, the first terminal may select the retransmission resource at any position after the initial transmission resource when performing the resource selection procedure.

Further, before step 12, the method further includes: obtaining the DRX configuration of the second terminal, wherein the DRX configuration of the second terminal includes at least on-duration of monitoring the sidelink by the second terminal and DRX cycle.

In an embodiment, obtaining the DRX configuration of the second terminal includes: sending a configuration obtaining request to a network and receiving the DRX configuration of the second terminal fed back by the network according to the configuration obtaining request.

In another embodiment, obtaining the DRX configuration of the second terminal includes: receiving the DRX configuration of the second terminal sent by the first terminal, wherein, the second terminal is a terminal that has previously established a connection with the first terminal.

The discontinuous reception DRX procedure of the second terminal is described below.

The second terminal monitors the PSCCH and the PSSCH during the on-duration, and after receiving the data packet of initial transmission of the first terminal, the DRX procedure of the second terminal can be divided into the following types:

Procedure 1:

after receiving the data packet sent by the transmitting UE, if the data packet is successfully decoded or a transmission finish indication sent by the transmitting UE is received, then entering the sleep state after the DRX on-duration timer expires, until the DRX on-duration timer starts again.

In the procedure 1, the transmission finish indication is the indication information sent by the first terminal to the second terminal at the time of the last transmission, and used to indicate the transmission finish of the current data packet, even if the second terminal fails to decode successfully, there is also no need to continue waiting for retransmitted packets.

As shown in Fig. 15, data packets of the initial transmission are successfully decoded. The second terminal does not need to continue to monitor the retransmission, and can enter a sleep state after the drx-onDurationTimer expires.

If the receiving UE supports retransmission based on HARQ ACK/NACK feedback, the UE sends ACK feedback to the transmitting UE after successfully decoding the data packets.

Procedure 2:

after receiving the data packet of the initial transmission sent by the first terminal, starting a DRX inactivity timer if the data packet of the initial transmission is not successfully decoded, or according to a transmission resource position of a retransmission data packet indicated by the data packet of the initial transmission, monitoring the retransmission data packet;

Specifically, the procedure 2 may further include the following cases:

case 1: the data packet supports resource preemption and the receiving UE does not support HARQ-based retransmission;

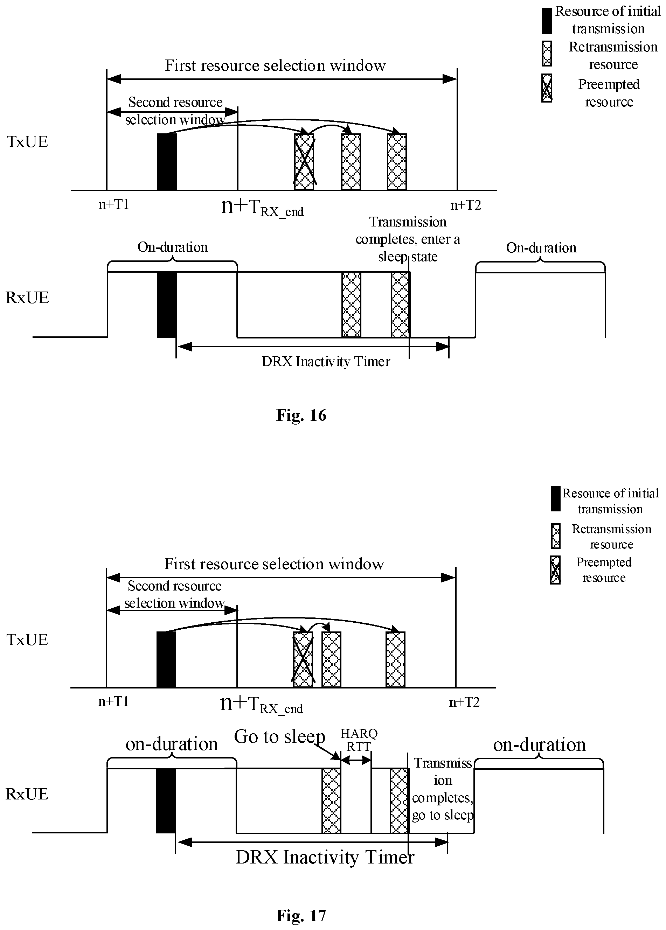

In this case, as shown in Fig. 16, since the retransmission resources indicated by an initial transmission SCI of the first terminal may be preempted by other terminals, the second terminal cannot determine the transmission position of the retransmission data packet according to the indication of the SCI, and a DRX procedure of the second terminal may include:

1-1, starting a drx-inactivityTimer to monitor subsequent data packets;

1-2: continuously monitoring the PSCCH and the PSSCH when the drx-inactivityTimer is running;

1-3: when the drx-inactivityTimer expires but the second terminal still fails to successfully receive the current data packet, re-starting the drx-inactivityTimer and execute the step 1-2 again;

1-4: after successfully decoding the data packet or receiving the transmission finish indication from the first terminal, and after the drx-onDurationTimer expires, entering the sleep state until the drx-on-DurationTimer starts again.

Case 2: the resource preemption of a data packet is supported and the receiving UE supports retransmission based on HARQ feedback;

In this case, as shown in Fig. 17, since the retransmission resource indicated by the initial transmission SCI of the first terminal may be preempted by other terminals, the second terminal cannot determine the transmission position of a retransmission packet according to the indication, and since the transmission interval of HARQ RTT needs to be satisfied between two adjacent transmissions of the first terminal, the second terminal may enter the sleep state subsequent to receiving the retransmission data packet every time after the drx-onDurationTimer expires, and the duration is equal to the HARQ RTT, the DRX procedure of the second terminal may include:

2-1: starting the drx-inactivityTimer, and sending NACK feedback to the transmitting UE;

2-2: during a running duration of the drx-inactivityTimer, monitoring the PSCCH and the PSSCH, and sending NACK feedback to the first terminal when receiving the retransmission data packet but failing to decode the data packet successfully; and if the drx-onDurationTimer has expired after sending the NACK feedback, then the second terminal enters the sleep state and wakes up after the HARQ RTT has passed, and continuing to monitor the PSCCH and the PSSCH;

2-3: when the drx-inactivityTimer expires but the second terminal still fails to successfully receive the current data packet, starting the drx-inactivityTimer again and executing the step 2-2 again;

2-4: entering the sleep state by the second terminal after successfully decoding the data packet or receiving a transmission finish indication from the first terminal and after the drx-onDurationTimer expires, until the drx-onDurationTimer is started again.

Case 3: resource preemption of the data packet is not supported;

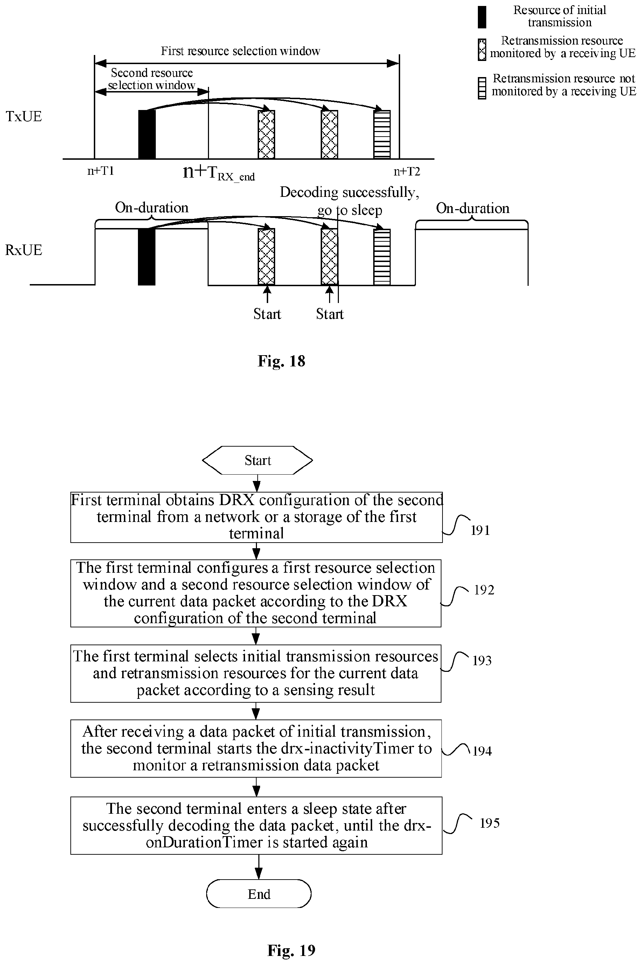

In this case, as shown in Fig. 18, since the resources indicated by the initial transmission SCI are not preempted, the second terminal may determine the transmission position of the retransmission packet according to the indication of the initial transmission SCI, without starting the drx-inactivityTimer. The DRX procedure of the second terminal may include:

3-1: the second terminal records the transmission position of the retransmission data packet obtained by decode the initial transmission SCI, wherein if retransmission based on HARQ feedback is supported, then NACK feedback is sent to the transmitting UE;

3-2: the second terminal enters the sleep state after the drx-onDurationTimer expires, and starts at the transmission position of the corresponding retransmission data packet to monitor the retransmission data packet, wherein if the HARQ-based retransmission is supported and If the retransmission data packet is received but cannot be decoded successfully, NACK feedback is sent to the transmitting UE;

3-3: the second terminal enters the sleep state after successfully decoding a data packet or receiving a transmission finish indication from the first terminal and the drx-onDurationTimer expires, until the drx-onDurationTimer starts again, wherein if retransmission based on HARQ ACK/NACK feedback is supported, then after successfully decoding the data packet, ACK feedback is sent to the transmitting UE.

The data transmission method of the first terminal and the discontinuous reception procedure of the second terminal of the present disclosure are exemplarily described below. As in Fig. 19, the following steps 191-194 may be included:

Step 191: the first terminal obtains DRX configuration of the second terminal from a network or a storage of the first terminal.

Step 192: the first terminal configures a first resource selection window and a second resource selection window of the current data packet according to the DRX configuration of the second terminal.

The first resource selection window is a time period from $n+T1$ to $n+T2$, where n is a generation time instant of the current data packet, $0 \leq T1 \leq Tproc,1$, Tproc, 1 represents the transmission processing delay of the terminal, $T2min \leq T2 \leq$ remaining PDB, T2min is the minimum value of T2 configured by the higher layer, and remarking PDB is the remaining delay budget of the data packet.

The second resource selection window is a time period from $n+T1$ to $n+T_{RX\_end}$, and $n+T_{RX\_end}$ is an end of the current DRX-On Duration of the second terminal.

Step 193: the first terminal selects initial transmission resources and retransmission resources for the current data packet according to a sensing result.

Step 194: after receiving a data packet of initial transmission, the second terminal starts the drx-inactivityTimer to monitor a retransmission data packet.

Step 195: the second terminal enters a sleep state after successfully decoding the data packet, until the drx-onDurationTimer is started again.

In the above technical solutions, the first terminal configures the target resource selection window or configures the first resource selection window and the second resource selection window according to the DRX configuration of the second terminal. When the first terminal selects the initial transmission and retransmission resources for the current data packet according to the sensing result, it is ensured that at least one resource falls within a time period corresponding to the DRX-on duration of the second terminal. After receiving the data packet of initial transmission, the second terminal starts the drx-inactivityTimer, or monitors the retransmission data packet according to the indication of the initial transmission SCI. After successfully decoding the data packet or receiving a transmission finish indication from the first terminal, the second terminal enters the sleep state until the drx-onDurationTimer is started again. The first terminal configures the resource selection windows and selects the initial transmission and retransmission resources according to the DRX parameters of the second terminal, so that the second terminal can ensure reliable reception of the traffic while reducing power consumption, which is more suitable for resource selection and discontinuous reception of terminals UEs at both ends of a sidelink.

Second embodiment

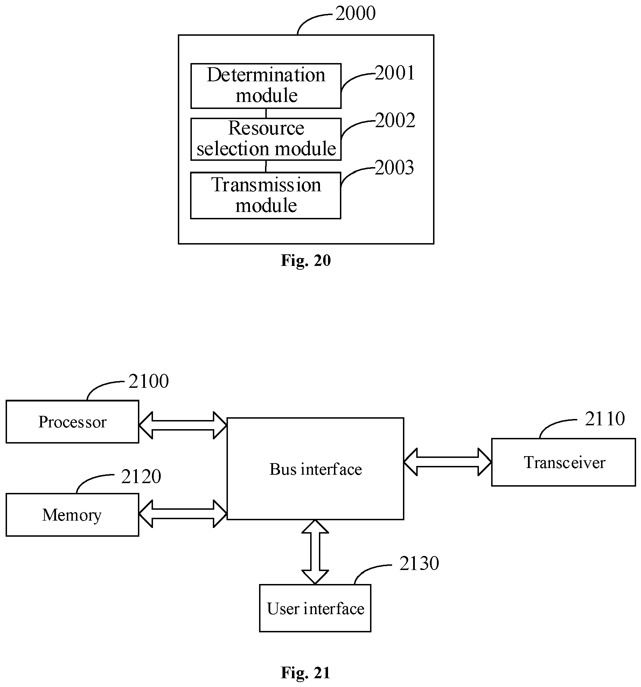

As shown in Fig. 20, an embodiment of the present disclosure provides a data transmission device 2000 applied to a first terminal. The device includes:

a determination module 2001, configured for determining a target resource selection window according to discontinuous reception DRX configuration of a second terminal;

a resource selection module 2002, configured for selecting a transmission resource for a data packet in the target resource selection window, wherein transmission resources of at least first M transmissions of the data packet are within a target time period, the target time period is a period in which the target resource selection window overlaps with an active time determined by the DRX configuration, $N \geq M \geq 1$, N is the total number of transmissions of data packets;

a transmission module 2003, configured for transmitting the data packet to the second terminal on the transmission resource.

Optionally, the determination module 2001 includes:
a first determination sub-module, configured for using a maximum value between $n+T_{RX\_on}$ and $n+T1$ as a start of the target resource selection window and using $n+T2$ as an end of the target resource selection window, wherein, $n+T_{RX\_on}$ is a start time instant of a first on-duration of the second terminal after a time instant n, n is an arrival time instant of data packets or a resource reselection time instant, $n+T1$ is a start of a determined resource selection window, $n+T2$ is an end of a determined resource selection window.

Optionally, the resource selection module 2002 includes:

a first selection sub-module, configured for obtaining a set of all available candidate single-slot resources from the target resource selection window by performing resource sensing;
a second selection sub-module, configured for randomly selecting transmission resources of first M transmissions of the data packets from candidate single-slot resources, having time-domain locations within the target time period, in the set of all available candidate single-slot resources;
wherein a start of the target time period is a maximum between $n+T_{RX\_on}$ and $n+T1$, an end of the target time period is $n+T_{RX\_end}$, and $n+T_{RX\_end}$ is an end time instant of a first on-duration of the second terminal after the time instant n, $n+T_{RX\_end}$ is earlier than $n+T2$.

Optionally, the resource selection module 2002 further includes:

a third selection sub-module, configured for selecting N-M transmission resources for the data packets from the set of all available candidate single-slot resources; or
a fourth selection sub-module, configured for selecting N-M transmission resources for the data packets from the candidate single-slot resources, having time-domain positions in a time period from the end of the target time period to $n+T2$, of the set of all available candidate single-slot resources.

Optionally, the resource selection module 2002 includes:
a fifth selection sub-module, configured for randomly selecting N transmission resources for the data packets from the set of all available candidate single-slot resources, and completing resource selection until first M transmission resources of the N transmission resources are determined to be in the target time period; wherein a start of the target time period is a maximum between $n+T_{RX\_on}$ and $n+T1$, an end of the target time period is $n+T_{RX\_end}$, and $n+T_{RX\_end}$ is an end time instant of the first on-duration of the second terminal after the time instant n, $n+T_{RX\_end}$ is earlier than $n+T2$.

Optionally, the target resource selection window includes a first resource selection window and a second resource selection window, the second resource selection window corresponds to the target time period, and the determination module 2001 includes:

a second determination sub-module, configured for using a maximum value between $n+T_{RX\_on}$ and $n+T1$ as a start of the first resource selection window, using $n+T2$ as an end of the first resource selection window, or using $n+T_{RX\_end}$ as a start of the first resource selection window, and using $n+T2$ as an end of the first resource selection window;
a third determination sub-module, configured for using a maximum value between $n+T_{RX\_on}$ and $n+T1$ as a start of the second resource selection window, and using $n+T_{RX\_end}$ as an end of the second resource selection window; wherein $n+T_{RX\_on}$ is the start time instant of the first on-duration of the second terminal after the time instant n, $n+T_{RX\_end}$ is the end time instant of the first on-duration of the second terminal after the time instant n, and n is the arrival time instant of the data packets or the resource reselection time instant; $n+T1$ is the start of the determined resource selection window, $n+T2$ is the end of the determined resource selection window, and $n+T_{RX\_end}$ is earlier than $n+T2$.

Optionally, the resource selection module 2002 includes:

a sixth selection sub-module, configured for obtaining a first set of available candidate single-slot resources from the first resource selection window by performing resource sensing, and obtaining a second set of available candidate single-slot resources;

a seventh selection sub-module, configured for selecting transmission resources for the first M transmissions of the data packets from the second set of available candidate single-slot resources; and

an eighth selection sub-module, configured for selecting transmission resources for N-M transmissions of the data packets from the first set of available candidate single-slot resources, $N \geq M \geq 1$.

Optionally, the device 2000 further includes:
an obtaining module, configured for obtaining the DRX configuration of the second terminal, wherein the DRX configuration of the second terminal includes at least on-duration of monitoring the sidelink by the second terminal and DRX cycle.

The second embodiment of the present disclosure corresponds to the method of the first embodiment, and all the implementations in the first embodiment are applicable to the embodiment of the data transmission device, and the same technical effect can be achieved.

Third embodiment

In order to better achieve the above object, as shown in Fig. 21, the present disclosure also provides a terminal, which is specifically a first terminal. The terminal includes: a processor 2100, and a memory 2120 connected to the processor 2100 through a bus interface, the memory 2120 is configured for storing programs and data used by the processor 2100 in performing operations and the processor 2100 calls and executes programs and data stored in the memory 2120.

A transceiver 2110 is connected to a bus interface and is configured for receiving and transmitting data under the control of the processor 2100, and the processor 2100 is configured for reading the program in the memory 2120 and performing the following steps:

determining a target resource selection window according to discontinuous reception DRX configuration of a second terminal;

selecting a transmission resource for a data packet in the target resource selection window, wherein transmission resources of at least first M transmissions of the data packet are within a target time period, the target time period is a period in which the target resource selection window overlaps with an active time determined by the DRX configuration, $N \geq M \geq 1$, N is the total number of transmissions of data packets;

transmitting the data packet to the second terminal on the transmission resource.

In Fig. 21, a bus architecture may include any number of interconnected buses and bridges, specifically, various circuits such as one or more processors represented by the processor 2100 and a memory represented by the memory 2120 are linked together. The bus architecture may also link together various other circuits, such as peripheral devices, voltage regulators, and power management circuits, which are well known in the art and, therefore, will not be described further herein. The bus interface provides an interface. The transceiver 2110 may be a number of elements, including a transmitter and a transceiver, for providing means for communicating with various other devices over a transmission medium. For different terminals, a user interface 2130 may also be an interface capable of externally and internally connecting with a desired device which includes, but not is limited to, a keypad, a display, a speaker, a microphone, a joystick, etc. The processor 2100 is responsible for managing the bus architecture and general processing, and the memory 2120 may store data used by the processor 2100 in performing operations.

Optionally, determining the target resource selection window according to the discontinuous reception DRX configuration of the second terminal by the processor 2100 specifically includes:
using a maximum value between $n+T_{RX\_on}$ and $n+T1$ as a start of the target resource selection window and using $n+T2$ as an end of the target resource selection window, wherein, $n+T_{Rx\_on}$ is a start time instant of a first on-duration of the second terminal after a time instant n, n is an arrival time instant of data packets or a resource reselection time instant, $n+T1$ is a start of a determined resource selection window, $n+T2$ is an end of a determined resource selection window.

Optionally, selecting the transmission resource for the data packet in the target resource selection window by the processor 2100 specifically includes:

obtaining a set of all available candidate single-slot resources from the target resource selection window by performing resource sensing;

randomly selecting transmission resources of first M transmissions of the data packets from candidate single-slot resources, having time-domain locations within the target time period, in the set of all available candidate single-slot resources;

wherein a start of the target time period is a maximum between $n+T_{RX\_on}$ and $n+T1$, an end of the target time period is $n+T_{RX\_end}$, and $n+T_{RX\_end}$ is an end time instant of a first on-duration of the second terminal after the time instant n, $n+T_{RX\_end}$ is earlier than $n+T2$.

Optionally, selecting the transmission resource for the data packet in the target resource selection window by the processor 2100 specifically includes:

selecting N-M transmission resources for the data packets from the set of all available candidate single-slot resources; or
selecting N-M transmission resources for the data packets from the candidate single-slot resources, having time-domain positions in a time period from the end of the target time period to n+T2, of the set of all available candidate single-slot resources.

Optionally, selecting the transmission resource for the data packet in the target resource selection window by the processor 2100 specifically includes:
randomly selecting N transmission resources for the data packets from the set of all available candidate single-slot resources, and completing resource selection until first M transmission resources of the N transmission resources are determined to be in the target time period; wherein a start of the target time period is a maximum between $n+T_{RX\_on}$ and n+T1, an end of the target time period is $n+T_{RX\_end}$, and $n+T_{RX\_end}$ is an end time instant of the first on-duration of the second terminal after the time instant n, $n+T_{RX\_end}$ is earlier than n+T2.

Optionally, the target resource selection window includes a first resource selection window and a second resource selection window, the second resource selection window corresponds to the target time period. Determining the target resource selection window according to the discontinuous reception DRX configuration of the second terminal by the processor 2100 specifically includes:

using a maximum value between $n+T_{RX\_on}$ and n+T1 as a start of the first resource selection window, using n+T2 as an end of the first resource selection window, or using $n+T_{RX\_end}$ as a start of the first resource selection window, and using n+T2 as an end of the first resource selection window;
using a maximum value between $n+T_{RX\_on}$ and n+T1 as a start of the second resource selection window, and using $n+T_{RX\_end}$ as an end of the second resource selection window; wherein $n+T_{Rx\_on}$ is the start time instant of the first on-duration of the second terminal after the time instant n, $n+T_{RX\_end}$ is the end time instant of the first on-duration of the second terminal after the time instant n, and n is the arrival time instant of the data packets or the resource reselection time instant; n+T1 is the start of the determined resource selection window, n+T2 is the end of the determined resource selection window, and $n+T_{RX\_end}$ is earlier than n+T2.

Optionally, selecting the transmission resource for the data packet in the target resource selection window by the processor 2100 specifically includes:

obtaining a first set of available candidate single-slot resources from the first resource selection window by performing resource sensing, and obtaining a second set of available candidate single-slot resources;
selecting transmission resources for the first M transmissions of the data packets from the second set of available candidate single-slot resources; and
selecting transmission resources for N-M transmissions of the data packets from the first set of available candidate single-slot resources, N≥M≥1.

Optionally, before determining the target resource selection window according to the discontinuous reception DRX configuration of the second terminal by the processor 2100, the processor 2100 is further configured for:
obtaining the DRX configuration of the second terminal, wherein the DRX configuration of the second terminal includes at least on-duration of monitoring the sidelink by the second terminal and DRX cycle.

The terminal provided by the present disclosure determines a target resource selection window according to a discontinuous reception DRX configuration of a second terminal, and selects a transmission resource for a data packet in the target resource selection window, arranges at least the first M transmission resources of the data packet within a target time period, wherein the target time period is a period in which the target resource selection window overlaps with an active time determined by the DRX configuration, N≥M≥1, N is the total transmission times of the data packet; and further transmits the data packet to the second terminal on the transmission resource. In this way, the influence of the DRX configuration of the second terminal on selection of the initial transmission and retransmission resources of the first terminal is fully considered, and it can be ensured that at least first M times of selection of transmission resources correspond to the reception period of the second terminal, thereby enabling the second terminal to ensure reliable reception of traffic while reducing power consumption.

It is understood by those skilled in the art that all or part of the steps of implementing the above embodiments may be performed by hardware, or may be performed by a computer program indicating relevant hardware, The computer program includes instructions for performing some or all of the steps of the method described above; and the computer program may be stored in a readable storage medium, which may be any form of storage medium.

In addition, embodiment of that present disclosure also provide a computer-readable storage medium having a computer program stored thereon. When the computer program is executed by a processor, the processor implements the step of the method in the first embodiment described above, and can achieve the same technical effect. In order to avoid repetition, detailed description is not repeated here.

Furthermore, it should be noted that in the device and the method of the present disclosure, it is apparent that components or steps may be disassembled and/or reassembled. The disassembling and/or reassembling should be considered to be an equivalent solution to the present disclosure. The steps of performing the above-described series of processes may naturally be performed in a time order in the order described, but need not necessarily be performed in the time order only, and some steps may be performed in parallel or independently of each other. It will be apparent to one of ordinary skill in the art that all or any of the steps or components of the method and the device of the present disclosure may be implemented in any computing device (including processors, storage media, etc.) or a network of computing devices in forms of hardware, firmware, software, or combinations thereof. This can be accomplished by those of ordinary skill in the art using their basic programming skills having read the description of this disclosure.

Accordingly, the objects of the present disclosure may also be achieved by executing a program or a group of programs on any computing device. The computing device may be a known general purpose device. Accordingly, the object of the present disclosure may also be achieved by merely providing a program product including program code for implementing the method or the device. That is, such a program product also constitutes the present disclosure, and a storage medium storing such a program product also constitutes the present disclosure. Obviously, the storage medium may be any known storage medium or any storage medium developed in the future. It should also be noted that in the device and the method of the present disclosure, components or steps may be disassembled and/or reassembled. These disassembling and/or reassembling should be considered to be equivalent embodiments of the present disclosure. The steps of executing the above-described series of processes may naturally be executed in the time order of describing the steps, but need not necessarily be executed in the time order. Some of the steps may be performed in parallel or independently of one another.

The foregoing is preferred embodiments of the present disclosure, and it should be noted that a number of modifications and embellishments may also be made by those of ordinary skill in the art without departing from the principles described herein. These modifications and embellishments are also to be considered within the protection scope of the present disclosure.

**Claims**

1. A data transmission method performed by a first terminal, comprising:

    determining a target resource selection window according to discontinuous reception DRX configuration of a second terminal;
    selecting a transmission resource for a data packet in the target resource selection window, wherein transmission resources of at least first M transmissions of the data packet are within a target time period, the target time period is a period in which the target resource selection window overlaps with an active time determined by the DRX configuration, $N \geq M \geq 1$, N is a total quantity of transmissions of the data packet;
    transmitting the data packet to the second terminal on the transmission resource.

2. The data transmission method according to claim 1, wherein determining the target resource selection window according to the discontinuous reception DRX configuration of the second terminal comprises:
    using a maximum value between $n+T_{RX\_on}$ and $n+T1$ as a start of the target resource selection window and using $n+T2$ as an end of the target resource selection window, wherein, $n+T_{Rx\_on}$ is a start time instant of a first on-duration of the second terminal after a time instant n, n is an arrival time instant of data packets or a resource reselection time instant, $n+T1$ is a start of a determined resource selection window, $n+T2$ is an end of a determined resource selection window.

3. The data transmission method according to claim 2, wherein selecting the transmission resource for the data packet in the target resource selection window comprises:

    obtaining a set of all available candidate single-slot resources in the target resource selection window by performing resource sensing;
    randomly selecting the transmission resources of the first M transmissions of the data packet from candidate single-slot resources, having time-domain locations within the target time period, in the set of all available candidate single-slot resources;

wherein a start of the target time period is a maximum between $n+T_{RX\_on}$ and $n+T1$, an end of the target time period is $n+T_{RX\_end}$, and $n+T_{RX\_end}$ is an end time instant of a first on-duration of the second terminal after a time instant n, $n+T_{RX\_end}$ is earlier than $n+T2$.

**4.** The data transmission method according to claim 3, wherein selecting the transmission resource for the data packet in the target resource selection window further comprises:

selecting N-M transmission resources for the data packet from the set of all available candidate single-slot resources; or

selecting N-M transmission resources for the data packet from candidate single-slot resources, having time-domain locations in a time period from an end of the target time period to $n+T2$, of the set of all available candidate single-slot resources.

**5.** The data transmission method according to claim 3, wherein selecting the transmission resource for the data packet in the target resource selection window further comprises:

randomly selecting N transmission resources for the data packet from the set of all available candidate single-slot resources, and completing resource selection until first M transmission resources of the N transmission resources are determined to be in the target time period;

wherein a start of the target time period is a maximum between $n+T_{RX\_on}$ and $n+T1$, an end of the target time period is $n+T_{RX\_end}$, and $n+T_{RX\_end}$ is an end time instant of a first on-duration of the second terminal after a time instant n, $n+T_{RX\_end}$ is earlier than $n+T2$.

**6.** The data transmission method according to claim 1, wherein the target resource selection window comprises a first resource selection window and a second resource selection window, the second resource selection window corresponds to the target time period;

determining the target resource selection window according to the discontinuous reception DRX configuration of the second terminal comprises:

using a maximum value between $n+T_{RX\_on}$ and $n+T1$ as a start of the first resource selection window, using $n+T2$ as an end of the first resource selection window, or using $n+T_{RX\_end}$ as a start of the first resource selection window, and using $n+T2$ as an end of the first resource selection window;

using a maximum value between $n+T_{RX\_on}$ and $n+T1$ as a start of the second resource selection window, and using $n+T_{RX\_end}$ as an end of the second resource selection window; wherein $n+T_{Rx\_on}$ is a start time instant of a first on-duration of the second terminal after a time instant n, $n+T_{RX\_end}$ is an end time instant of the first on-duration of the second terminal after the time instant n, and n is an arrival time instant of the data packet or a resource reselection time instant; $n+T1$ is a start of a determined resource selection window, $n+T2$ is an end of the determined resource selection window, and $n+T_{RX\_end}$ is earlier than $n+T2$.

**7.** The data transmission method according to claim 6, wherein selecting the transmission resource for the data packet in the target resource selection window comprises:

obtaining a first set of available candidate single-slot resources in the first resource selection window, and a second set of available candidate single-slot resources in the second resource selection window by performing resource sensing;

selecting transmission resources for the first M transmissions of the data packet from the second set of available candidate single-slot resources; and

selecting transmission resources for N-M transmissions of the data packet from the first set of available candidate single-slot resources, $N \geq M \geq 1$.

**8.** The data transmission method according to claim 1, wherein, before determining the target resource selection window according to the discontinuous reception DRX configuration of the second terminal, the method further comprises:

obtaining the DRX configuration of the second terminal, wherein the DRX configuration of the second terminal comprises at least on-duration of monitoring a sidelink by the second terminal and DRX cycle.

**9.** A terminal, which is a first terminal, including a transceiver, a memory, a processor, and a computer program stored on the memory and executable on the processor, wherein, when the processor executes the computer program, the processor implements the steps of the data transmission method according to any one of claims 1 to 8.

10. A data transmission device, applied to a first terminal, comprising:

a determining module, configured to determine a target resource selection window according to discontinuous reception DRX configuration of a second terminal;
a resource selection module, configured to select a transmission resource for a data packet in the target resource selection window, wherein transmission resources of at least first M transmissions of the data packet are within a target time period, the target time period is a period in which the target resource selection window overlaps with an active time determined by the DRX configuration, $N \geq M \geq 1$, N is a total quantity of transmissions of the data packet;
a transmission module, configured to transmit the data packet to the second terminal on the transmission resource.

11. A computer readable storage medium having stored thereon a computer program, wherein when the computer program is executed by a processor, the processor implements steps of the data transmission method according to any one of claims 1 to 8.

**Fig. 1**

**Fig. 2**

**Fig. 3**

Time instant at which
preemption may be
determined

◀Sensing window of preemption▶    ┌Resource selection window of
preemption

n'>m-T3

i                    m

n'-T0                          n'-T$_{proc,0}$   n'  n'+T1                    n'+T2

**Fig. 4**

```
                    ╱‾‾‾‾‾‾‾‾‾‾‾‾‾‾╲
                   ⟨     Start      ⟩
                    ╲_____╱
                           │
                           ▼
```

Determining a target resource selection window according to
discontinuous reception DRX configuration of a second terminal    11

Selecting a transmission resource for a data packet in the target
resource selection window, wherein transmission resources of at
least first M transmissions of the data packet are within a target time
period, the target time period is a period in which the target resource
selection window overlaps with an active time determined by the
DRX configuration, $N \geq M \geq 1$, N is a total quantity of transmissions of
the data packet    12

Transmitting the data packet to the second terminal on the
transmission resource    13

```
                    ╱‾‾‾‾‾‾‾‾‾‾‾╲
                   (     End      )
                    ╲_____╱
```

**Fig. 5**

**Fig. 6**

First resource selection
window

Second
resource
selection
window

TxUE

n   n+T1   n+$T_{RX\_on}$   n+$T_{RX\_end}$   n+T2

On duration

RxUE

**Fig. 7**

First resource
selection window

Second
resource
selection
window

TxUE

n   n+T1   n+$T_{RX\_end}$   n+T2

On
duration

RxUE

**Fig. 8**

**Fig. 9**

**Fig. 10**

```
                    ┌──────────────┐
                    │    Start     │
                    └──────┬───────┘
                           │
                           ▼
┌──────────────────────────────────────────────────────┐
│Obtaining a first set of available candidate single-slot│
│resources from the first resource selection window by   │
│performing resource sensing, obtaining a second set of  │        121b
│available candidate single-slot resources               │
└──────────────────────────┬─────────────────────────────┘
                           │
                           ▼
┌──────────────────────────────────────────────────────┐
│Selecting transmission resources for the first M        │
│transmissions of the data packets from the second set of│
│available candidate single-slot resources, and selecting│        122b
│transmission resources for N-M transmissions of the data│
│packets from the first set of available candidate        │
│single-slot resources, N≥M≥1                            │
└──────────────────────────┬─────────────────────────────┘
                           │
                           ▼
                    ┌──────────────┐
                    │     End      │
                    └──────────────┘
```

**Fig. 11**

Resource of initial transmission

Retransmission resource

First resource selection window

Second resource selection window

$S_B$  $S_A$

$n+T1$  $n+T_{RX\_end}$  $n+T2$

**Fig. 12**

Initializing $S_A$ as a set of all candidate single-slot resources in the first resource selection window, initializing $S_B$ as a set of all candidate single-slot resources in the second resource selection window, wherein the total numbers of candidate resources in $S_A$ and in $S_B$ are $M_{total\_1}$ and $M_{total\_2}$, respectively

b1

Excluding the candidate resources corresponding to skip slots in SA and SB and excluding the candidate resources overlapping the reserved resources in the received SCI and having a RSRP higher than a threshold value, and obtaining a first set of available candidate single-slot resources and a second set of available candidate single-slot resources, respectively

b2

121b

Yes

Determining whether number of remaining resources in SA is less than $X_1\times$ Mtotal_1, and/or, whether number of remaining resources in SB is less than $X2\times$Mtotal_2?

b3

No

Reporting the first set of available candidate single-slot resources and the second set of available candidate single-slot resources to the higher layer

b4

Randomly selecting, by the higher layer, at least M resources for the current data packets from the second set of available candidate single-slot resources, the at least M resources including one initial transmission resource and M-1 retransmission resources; randomly selecting (N-M) retransmission resources for the current data packets from a first set of available candidate single-slot resources, where N is the total transmission times of the current data packets, M is an integer, $M \geqslant 1$ and $M \leqslant N$

b5

122b

End

**Fig. 13**

Resource of
initial
transmission

Retransmiss
ion resource

First resource selection window

Second resource
selection window

L≥HARQ RTT

L≥HARQ
RTT

n+T1

n+T$_{RX\_end}$

n+T2

**Fig. 14**

Resource of
initial
transmission

Retransmis
sion
resource

First resource selection window

Retransmission
resource not
monitored by a
receiving UE

Second resource
selection window

TxUE

n+T1

n+T$_{RX\_end}$

n+T2

On duration

On duration
expires
Go to sleep

On duration

RxUE

Successfully decoding
the initial transmission

**Fig. 15**

**Fig. 16**

**Fig. 17**

Resource of initial
transmission

Retransmission resource
monitored by a receiving UE

Retransmission resource not
monitored by a receiving UE

First resource selection window

Second resource
selection window

TxUE

n+T1        $n+T_{RX\_end}$        n+T2

Decoding successfully,
go to sleep

On-duration        On-duration

RxUE

Start        Start

**Fig. 18**

Start

First terminal obtains DRX configuration of the second
terminal from a network or a storage of the first
terminal
191

The first terminal configures a first resource selection
window and a second resource selection window of
the current data packet according to the DRX
configuration of the second terminal
192

The first terminal selects initial transmission resources
and retransmission resources for the current data
packet according to a sensing result
193

After receiving a data packet of initial transmission,
the second terminal starts the drx-inactivityTimer to
monitor a retransmission data packet
194

The second terminal enters a sleep state after
successfully decoding the data packet, until the drx-
onDurationTimer is started again
195

End

**Fig. 19**

2000

Determination module — 2001

Resource selection module — 2002

Transmission module — 2003

**Fig. 20**

2100

Processor

2120

Memory

Bus interface

2110

Transceiver

2130

User interface

**Fig. 21**

## INTERNATIONAL SEARCH REPORT

| International application No. |
|---|
| **PCT/CN2021/125903** |

| **A.** | **CLASSIFICATION OF SUBJECT MATTER** |
|---|---|

H04W 52/02(2009.01)i; H04W 76/28(2018.01)n; H04W 72/04(2009.01)n

According to International Patent Classification (IPC) or to both national classification and IPC

| **B.** | **FIELDS SEARCHED** |
|---|---|

Minimum documentation searched (classification system followed by classification symbols)

H04W; HO4L; H04B

Documentation searched other than minimum documentation to the extent that such documents are included in the fields searched

Electronic data base consulted during the international search (name of data base and, where practicable, search terms used)

CNABS, CNKI, CNTXT, VEN, WOTXT, USTXT, EPTXT, 3GPP: 不连续接收, 非连续接收, 配置, 窗口, 重叠, 重合, 侧链路, 直连, DRX, configuration, window, overlap, sidelink, D2D

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 112272397 A (GOHIGH DATA NETWORKS TECHNOLOGY CO., LTD.) 26 January 2021 (2021-01-26)<br>claims 1-11 | 1-11 |
| A | CN 105379406 A (HUAWEI TECHNOLOGIES CO., LTD.) 02 March 2016 (2016-03-02)<br>entire document | 1-11 |
| A | CN 107306423 A (CHINA ACADEMY OF TELECOMMUNICATIONS TECHNOLOGY) 31 October 2017 (2017-10-31)<br>entire document | 1-11 |
| A | CN 101483891 A (NTT DOCOMO, INC.) 15 July 2009 (2009-07-15)<br>entire document | 1-11 |
| A | WO 2018064477 A1 (INTEL IP CORPORATION) 05 April 2018 (2018-04-05)<br>entire document | 1-11 |
| A | VIVO. "3GPP TSG RAN WG1 #102-e R1-2005403"<br>*Resource allocation for sidelink power saving*, Vol. , No. , 07 August 2020 (2020-08-07), ISSN: ,<br>entire document | 1-11 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 January 2022** | **13 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/125903**

| Patent document cited in search report | | | Publication date (day/month/year) | Patent family member(s) | | | Publication date (day/month/year) |
|---|---|---|---|---|---|---|---|
| CN | 112272397 | A | 26 January 2021 | None | | | |
| CN | 105379406 | A | 02 March 2016 | WO | 2015176251 | A1 | 26 November 2015 |
| | | | | CN | 105379406 | B | 06 December 2019 |
| CN | 107306423 | A | 31 October 2017 | WO | 2017185867 | A1 | 02 November 2017 |
| | | | | CN | 107306423 | B | 17 September 2019 |
| CN | 101483891 | A | 15 July 2009 | EP | 2079269 | A2 | 15 July 2009 |
| | | | | EP | 2079269 | A3 | 13 November 2013 |
| | | | | EP | 2079269 | B1 | 26 April 2017 |
| | | | | US | 2009175186 | A1 | 09 July 2009 |
| | | | | US | 7965651 | B2 | 21 June 2011 |
| | | | | CN | 101483891 | B | 05 December 2012 |
| | | | | JP | 2009165133 | A | 23 July 2009 |
| | | | | JP | 4801176 | B2 | 26 October 2011 |
| WO | 2018064477 | A1 | 05 April 2018 | None | | | |

Form PCT/ISA/210 (patent family annex) (January 2015)

**REFERENCES CITED IN THE DESCRIPTION**

**Patent documents cited in the description**

- CN 202011140957